# EUROPEAN PATENT SPECIFICATION

(11) **EP 0 497 814 B1**
(45) Date of publication and mention of the grant of the patent: **14.09.1994**
(21) Application number: 90915529.3
(22) Date of filing: 22.10.1990
(51) Int. Cl.: G01V 1/16, G01V 1/38

(54) **SEISMIC CABLE**
SEISMISCHES KABEL
CABLE SISMIQUE

(30) Priority: 26.10.1989 NO 894261
(43) Date of publication of application: 12.08.1992
(60) Divisional application: 94200089.4
(73) Proprietor: DEN NORSKE STATS OLJESELSKAP A.S., 4001 Stavanger (NO)
(72) Inventor: SVENNING, Bjornar, N-7021 Trondheim (NO); BERG, Eivind, N-7053 Ranheim (NO)
(74) Representative: Rees, David Christopher
(86) International application number: PCT/NO90/00157
(87) International publication number: WO 91/06877

(56) References cited:
- EP-A- 0 210 925
- US-A- 3 713 085
- US-A- 3 987 404
- US-A- 4 323 988
- US-A- 4 500 980
- US-A- 4 725 990
- US-A- 4 870 625
- US-A- 4 920 523

## Description

The present invention relates to a marine seismic sea-bed cable for the execution for marine exploration. More specifically, the invention concerns seismic exploration of the substrata at sea, where pressure waves and shear waves from a substratum are measured in response to the release of pressure and shear energy.

Marine seismic explorations are usually carried out by a seismic cable provided with several hydrophones being towed at a certain depth. Pressure waves can be released near the cable in several ways. This usually takes the place by means of air guns. The pressure wave energy moves downwards through the substratum, but parts of the pressure waves are reflected from areas where there are acoustic impedance characteristics in the substratum. Hydrophones register the reflected pressure waves in the water and transform this information to electric signals which are received and processed on the seismic ship which tows the cable. Using this method, only reflected or converted shear to pressure energy is recorded. However it is known that down in the substratum both pressure waves and shear waves are reflected. The shear waves do not travel in water and therefore cannot be detected by a hydrophone cable.

In US Patent No. 4725990, a marine cable is suggested, which is dragged along the seabed and which is provided with geophones. The cable is supposed to detect shear forces, but it has several disadvantages and weaknesses. During employment it will firstly be problematic classifying pressure waves which are reflected from the sea's surface. Secondly, all of the components are enclosed in a sleeve, which causes blows against the cable to travel to the geophones. Nor will the geophones achieve the desired contact with the sea bed. Furthermore, only one-component data is measured.

EP-A-210925 is concerned with a downhole seismic exploration device. 0-ring supports are employed to isolate the seismic detectors from a logging cable. US 4500980 is concerned with a marine seismic streamer cable in which connecting arrangements for succeeding sections of the cable are designed to distribute tensile stress and to eliminate rotation. US 4870625 is concerned with a method of conducting marine seismic exploration in which a streamer cable is used. In this case, geophones are suspended from the streamer cable.

It is an object of the invention to provide a new and improved cable for measurement of both shear waves and pressure waves.

According to the invention, there is provided a marine seismic cable for use on or near the sea bed comprising one or more pulling cables, a data cable and a sleeve which surrounds these, and groups of geophones located in a cable sphere behind each other along the cable, characterised in that: each cable sphere comprises an inner clamp for through running of the cables and outer clamps which connect the cable sphere and the sleeve; each group of geophones and position metering instruments are located in a lower sphere part of each cable sphere; a wave-shaped spring is located on a shoulder on each of the outer clamps and with the outer surface of the wave-shaped spring resting against the inner side of an outwardly facing collar of the cable sphere for radial shock insulation; and a wave-shaped ring is located internally for and in contact with each of the end parts of the inner clamp and on the outer side of the end surfaces of the cable sphere for axial shock insulation.

Preferably, the cable sphere comprises a middle sphere part comprising a cavity with a floor and two walls through which the cables located in the inner clamp extend, and an upper sphere part for closing the cavity of the middle sphere part. Preferably, the cable sphere also includes a lower sphere part having a cavity for geophones and position metering instruments which is closed and water-tightly fastened to the underside of middle sphere part. In one preferred embodiment, the geophones and position metering instruments are moulded in the geophone cavity by means of a polymer material.

Preferably, the internal clamp comprises an upper clamp part and a lower clamp part which each include a plate-formed middle part, and a semi-cylindrical end parts comprising in the axial direction an external surface, an internal surface, a guiding groove between these and innermost a vertical surface adapted for the accommodation of wave rings.

Preferably, the middle sphere part comprises a floor and walls and in that is arranged with an inlet and a terminal for one of the ends of a connector whose other end is connected to a data cable; a signal cable extending from the one end of the connector via the channel in middle sphere part and to the geophones/position metering instrument.

Preferably, the cable as a whole comprises two pulling cables and a data cable placed between these, that for each cable sphere point a data cable outlet is arranged, and that the cables are held in mutual position at each sphere point by grooves in an inner clamp. Preferably, the cable sphere parts have at each end an outwardly facing collar with an inwardly facing surface for contact with the wave shaped springs.

Preferably, the outer set of clamps which are divided into two comprise internally in the axial direction an outer surface, an inner surface, an elevation adapted to the grooves of the internal clamp and externally a shoulder against which the wave spring rests. Preferably, the cable sphere, in the mounted position, has a shape with a central cylindrical portion which, towards the end portions transforms into a conically narrowing portion and that the outer clamps also have as an extension a conically narrowing shape towards the cable.

Attention is drawn to the present Applicants' copending application, published under No. which is divided from the present application and which is concerned with a method of conducting marine seismic metering.

The invention may be carried into practice in various ways and some embodiments will now be described by way of example with reference to the accompanying drawings, in which:
Figure 1 shows the use of a sea-bed cable during seismic exploration, according to the invention;
Figure 2 illustrates the execution of a seismic exploration;
Figure 3 is an exploded perspective view of the sphere of a geophone cable;
Figure 4 is an exploded view of middle and lower ball parts;
Figure 5 is an exploded perspective view of the clamping parts of the sphere;
Figure 6 is a perspective view of the upper sphere part;
Figure 7 is a section through the middle geophone ball part; and
Figure 8 is a perspective view of the sphere, equipped with fins.

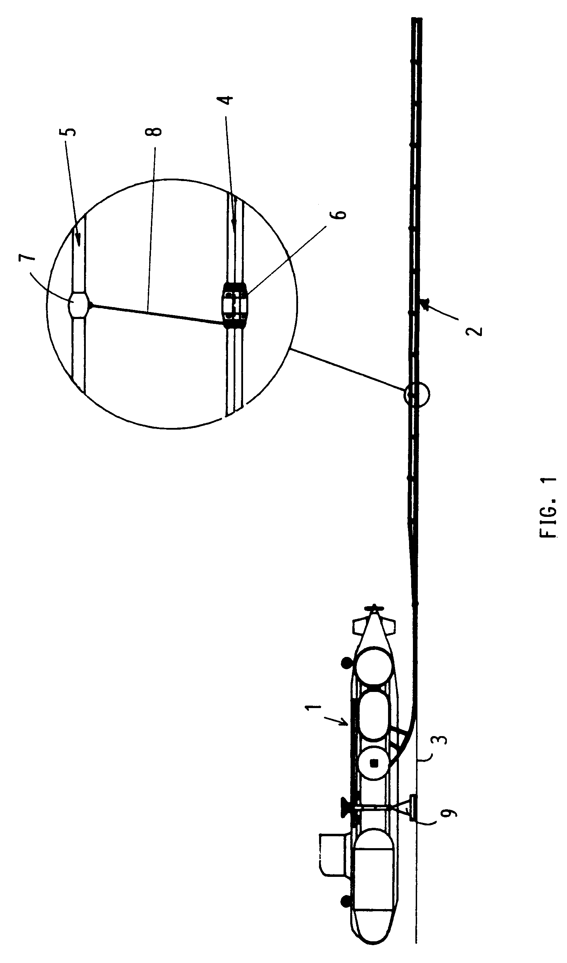

In Figure 1, an underwater vessel 1 is shown, which tows a seismic cable 2 along the sea-bed 3 for seismic exploration of the substratum beneath the sea-bed. Such a cable will be rather long, often 2-3 kilometres. The seismic cable 2 comprises two parallel cables, a lower geophone cable 4 and an upper hydrophone cable 5. The geophone cable 4 is towed along the bed 3 with which it is to have optimum contact, whilst the hydrophone cable 5 floats at a predetermined distance above the geophone cable 4. Cable spheres 5 containing geophones are located along the geophone cable 4 at constant intervals. The cable spheres 6 will be relatively heavy and make good contact with the bed.

In the area above each cable sphere on the geophone cable 4, a hydrophone element 7 is located on the hydrophone cable 5, the purpose of which will be described below. The hydrophone cable 5 is of a type which is well known and commercially available. Hydrophones can also be arranged in simple floating elements which are fastened to the geophone cable with individual cables of known length.

In order to ensure a definite distance between each cable sphere 6 and the hydrophones 7 a spacer 8 is arranged at each cable sphere 6.

In Figure 1, the underwater vessel 1 is shown as a seismic ship, which in many ways will be advantageous compared with a surface vessel. There will be no dependency on weather conditions and there will be no transmission of movement against the cable 2 as a result of wave-influence on the ship. Positioning of the cable 2 will also be easier. In pulling out the cable it will be necessary to raise it from the seabed. In this way, the geophone cable will work itself down into the seabed and achieve good contact. In sea areas where the bed is hard, it may be necessary to equip the foremost end of the cable with a tool which can make a ditch in the seabed. Such a tool can be a plough or a chain- which is mounted between the tow-vessel and the geophone cable. It is not however a condition of the invention that an underwater vessel 1 is used, although it is a part of a preferred concept.

The seismic ship will be provided with a source 9 for generating wave energy down into the substratum near the cable 2. The wave energy source can come from many known types of generator. Air cannon, which is the most usual source in marine surface seismology is a possibility, although it generates "secondary sources" (bubble effects) which will increase with increasing sea depth. Explosive sources is another well tried source of energy which gives very good results. The explosives can be laid out on the seabed or drilled into the formation.

In using an underwater vessel 1, a marine seabed vibrator will be particularly advantageous. A modified version of existing vibrators can be used, where is pressed against the seabed and functions as land seismic vibrators in operation. For softer seabed conditions, it can be appropriate to cause under-pressure in the vibrator shoe so that it adheres to the seabed. When the picture or pulse generation has increased so that it is released from the seabed. This method of operation will, using free-floating or light underwater vessels, increase productivity substantially, as compared with for example, ballasting.

An advantage of placing a vibrator on the seabed is that it is possible to make a greater part of the energy penetrate down into the seabed. Furthermore, control and flexibility of the transmitted source signatures are improved.

By placing a vibrator source on the seabed, it is also possible to generate shear waves. This can be done in several ways. A suitable way is to have two vibrators which will generate pressure waves when they operate in-phase and shear waves in counter-phase. By using several vibrators, polarisation of the transmitted signals will be achieved.

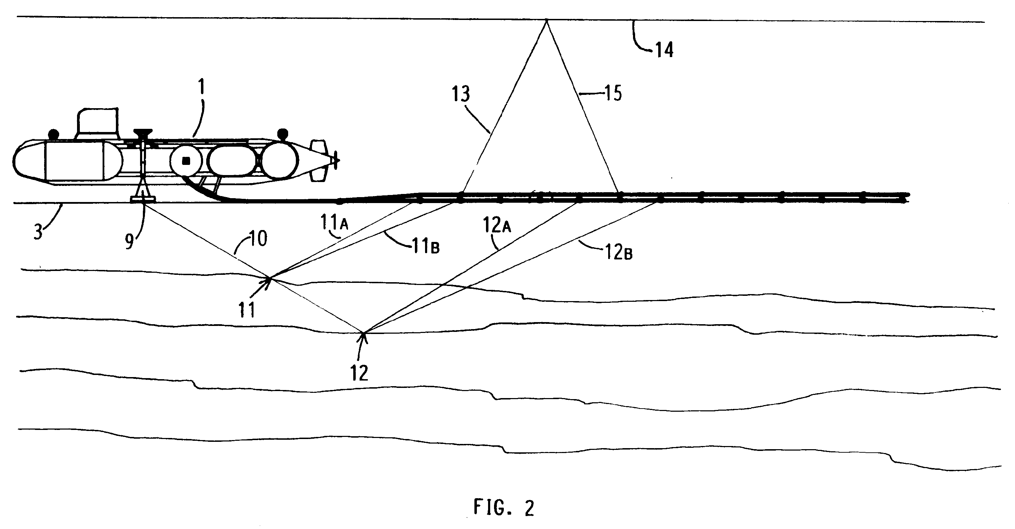

In the following, a seismic exploration according to the invention will be described, with reference to Figure 2.

A pressure wave or camined pressure and shear wave is generated from a source 9 and travels from the seabed 3 and down into the substratum. In areas where there is variation in acoustic impedance between the layers in the formation, for example at points 11 and 12, part of the wave will be reflected upwards as pressure and shear waves. They are indicated in Figure 2 as waves lla, llb and 12a, 12b from the points 11 and 12 and the waves are registered by the geophones and hydrophones. The shear waves do not travel in water and will stop at the seabed where they will convert into pressure waves. The pressure waves will travel further upwards, in Figure 2 illustrated as wave 13 which will reach the water surface 14 where part of it will be reflected back towards the seabed as wave 15. The aim of the hydrophone cable 5 is exactly the register the reflection waves from the surface so that when the collected data is processed, they can be filtered out. This filtering out is made possible by having two measuring points of known orientation and distance.

As mentioned previously the hydrophones are located along a hydrophone cable 5 in single elements on a known type. The suggested geophone spheres 6 on the geophone cable 4 are however novel and form a part of the invention.

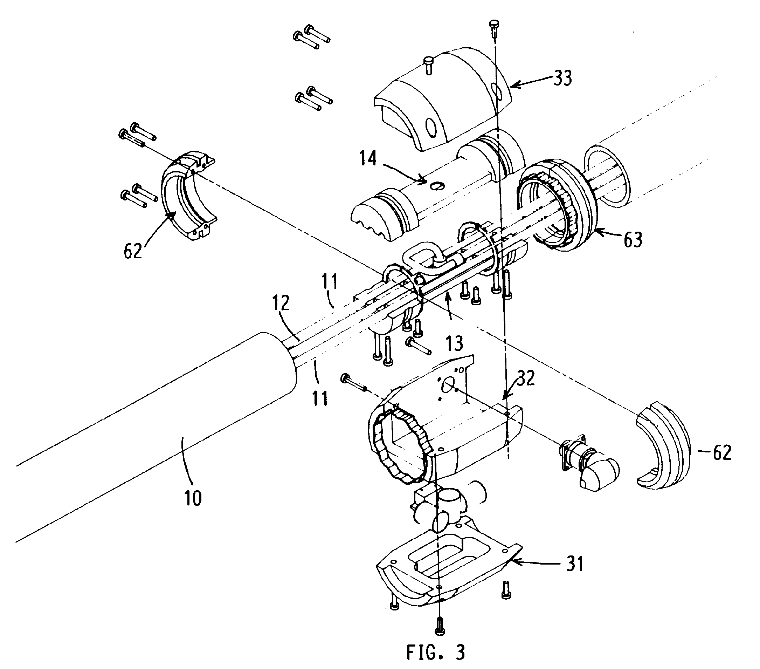

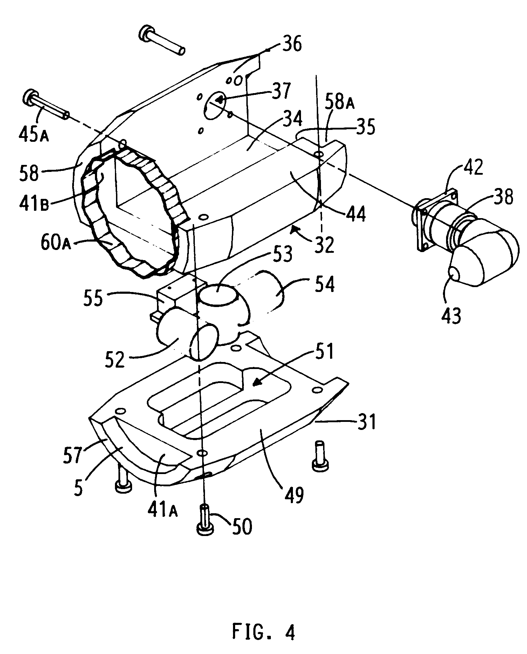

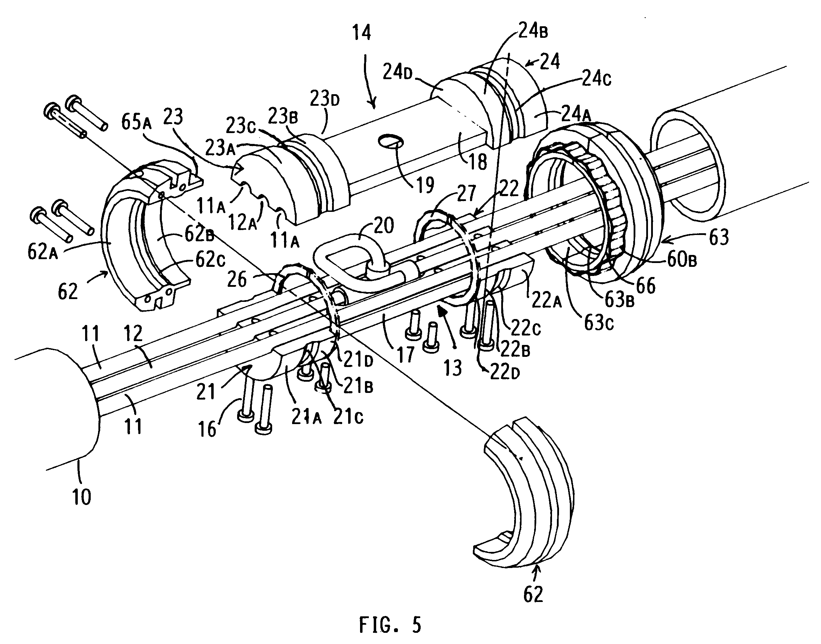

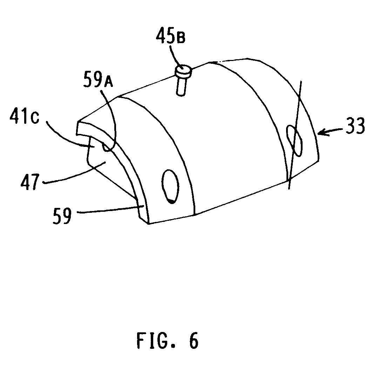

In Figure 3 an exploded overall view of one of the cable spheres 6 of the geophone cable 4 is shown and in the Figures 4 to 6, the various parts of the cable sphere are shown to a larger scale. The geophone cable comprises a protective sleeve 10 and three cables inside this. The two outer cables will be pulling-cables 11, and the middle cable will be a data cable 12 for transmission of information back to the seismic ship 1.

The cables rest in a two-piece clamp, 13,14 where, inside the clamp, a groove 11a, 12a for each cable is arranged. The lower clamp part 13 and the upper clamp part 14 are arranged in the illustrated embodiment to be fastened together by a bolt connection, shown in the figure by vertically directed clamp screws 16. The middle parts 17, 18 are formed as rectangular plates, but with the mentioned cut-out or moulded grooves 11a, 12a for the cables respectively on the clamp parts' top surface and underside. The middle area 18 of the upper clamp part 14 has an opening 19 for passage of a connecting wire 20 from the data cable 12. The end areas 21, 22, 23, 24 of the clamp parts 13,14 which in the assembled position will be cylindrically formed, comprise outer surfaces 21a-24a and inner sufaces 21b-24b along the length of the cable, and between these steering grooves 21c-24c adapted to a cam in an outside clamp, which will be described later. The vertical surfaces 21d-24d on the cylindrical end parts' inner-facing sides are adapted to hold two splittable wave rings 26,27. The function of the wave rings 26,27 will be described later.

The actual cable sphere 6 is divided into three and comprises a lower part 31 where geophones are placed, a middle part 32 through which the cables 11, 12 run and an upper part 33 which is virtually a cover for the middle part.

The middle part of the cable sphere includes an internal cavity with rectangular floor 34 and two vertical walls 35, 36 extending along the length of the cable.

The internal clamp parts 13,14 will be positioned inside the cavity, but in such a way that the clamp is mechanically insulated against transmission of blows to the cable sphere. In one of the walls 36 a channel 37 is arranged for a cable (not shown) to, for instance, the geophones.

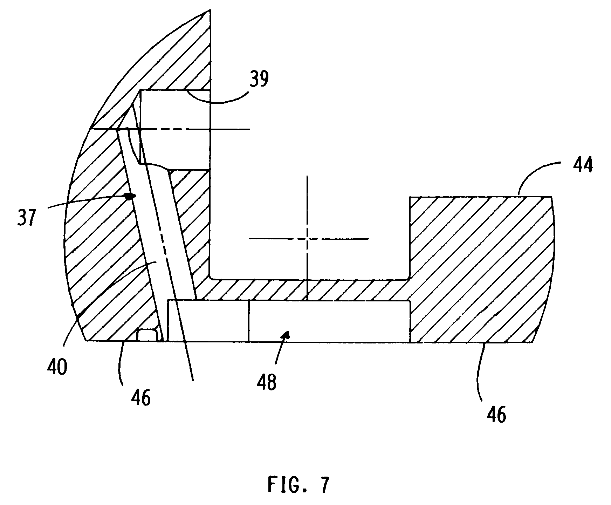

Figure 7 shows in detail how the channel 37 can be designed with a horizontal inlet 39 in which a connector 38 is placed and with a downwardly facing channel 40 to the underside 32 of the middle cable sphere part. The signal cable (not shown) is connected to the end of the connector and extends through the channel 37 and down to e.g. the geophones. The connector 38 will preferably be provided with a flange 42 which can be screwed fluid-tight to the wall 36 and will at its free end 43 be adapted to connect with the connecting wire 20. The connector 38 as such is of a known type and is commercially available.

The external faces of the walls of the middle sphere part 32 comprise segments in the sphere part's approximately cylindrically and partly conically formed outer surface. The one wall 36, which contains the channel 37, considerably higher than the outer wall 35. The short wall 35 has a horizontally abutment surface 44 while the high wall has a vertical flat surface, both adapted to be coupled together with corresponding abutment surfaces on the upper sphere part 33. The outer face of the upper sphere part 33 cover upper part of the walls' outer surfaces. To connect the parts, bolt-connections are used in the form of respectively horizontal screws 45a and vertical screws 45b.

The underside of the middle sphere part comprises, as is partly evident from Figure 7, a horizontal, downwardly facing contact surface 46 along the circumference. On the inside of the contact surface 46 there is a cavity 48 into which the previously mentioned channel 40 leads.

The lower sphere part 31 includes a corresponding upwardly-facing horizontal contact surface 49 which can be connected to the underside of the middle sphere part by means of a screw connection, shown in Figure 3 as a vertical screws 50. The lower sphere part 31 also includes a closed cavity 51 with a geometric shape which corresponds with the shape of the cavity 48 on the underside of the middle sphere part 32 and which in its mounted position becomes an extension of this cavity. This will subsequently be referred to as the geophone cavity 48,51.

Firstly, in the geophone cavity 48, 51, three geophones 52, 53, 54 are placed, orientated in the x, y and z directions. Secondly, a rotation and inclination meter 55 (inclinometer) is included. The geophones 52, 53, 54 and the rotation and inclination meter 55 are connected to the cable 12 via the wire which extends through the canal 37 of the middle sphere part. In a preferred embodiment, the geophones 52, 52, 54 and the rotation and inclination meter 55 can be moulded in the geophone cavity 48, 51 by means of a polymer material. The geophone cavity 48, 51 is, as mentioned, closed and shear and pressure waves can travel by the cable sphere moving at the same rate as the surrounding medium.

The geophones 52, 53, 54 and the rotation and inclination meter 55 are basically known and commercially available products.

Upper sphere part, as mentioned previously, is a kind of cover for the cavity in the middle cable sphere. In addition to having an outer surface which completes the outer surface of the middle sphere part, the upper sphere part 33 includes two transvers walls 47 which close the cavity upper sphere part at each end.

As will be apparent from the Figures, the wall thickness in the cable sphere 6 is quite considerable in order to give the sphere a heavy weight and thereby ensure good contact with the seabed. The cable sphere is preferably made of a metallic material, preferably steel.

The arrangement and mounting of the sphere component 6 in relation to inner clamps 13,14 and through-running cable 11, 12 will now be described in more detail.

As mentioned above, the cable sphere 6 is mechanically isolated from the actual cable. In order to insulate against flows and transmissions of movement along the length of the cable, wave rings 26,27 are mounted; these differ from ordinary plate rings in that they have a wave shape in the axial direction. The wave rings 26,27 are preferably made of an elastic metal, for example spring steel. The outer surface of the wave rings is mounted against the end portions 41a-41c of the sphere parts. Axial shocks in the cable will be subdued by the wave rings.

At each end, the cable sphere parts 31, 32, 33 have an outwardly facing collar 57, 58, 59 which have a radially inward-facing bearing surface 57a-59a for the accommodation of a wave shaped spring 60a, 60b. At each end, external outer clamps divided into two 62, 63 are placed . In Figure 7, they are shown separated (clamp 62) and assembled (clamp 63). The outer clamps 62, 63 comprise internally an axially outward-facing surface 62a, 63a, an axially inwardly facing surface 62b, 63b and cams 62c, 63c arranged in between these. The cam 62c, 63c, is adapted to fit the groove 21c-24c in the inner clamp. The end of the cable sleeve 10 can, in a preferred embodiment, be pressed between the outer face of the clamp 21a-24a and the outer face 62a, 63a of the outer clamp.

The outer clamps 62, 63 will have, externally, along the length of the cable, an inwardly facing gradation which comprises a shoulder 65a, 65b. The inner surfaces of the two wave springs 60a, 60b are designed to be located on the shoulders 65a, 65b as shown in the assembled outer clamp 63 in Figure 3. The function of the wave springs 60a, 60b is to absorb and prevent radial shocks from the cable from travelling to the cable sphere 6. This is achieved by using a cylindrical spring which is wave shaped in the radial direction. Such a wave spring will act approximately as several independent springs placed in a corresponding annulus. The wave springs are preferably made of an elastic, metallic material, preferably spring steel. The external surface of the outer clamps 62,63 will incidentally only be an extension of the outer surface of the cable sphere and adapted to this. It is preferable that the outer clamps 62,63 are also partly the end parts of the cable sphere narrow off conically towards the change-over to the cable. The middle part of the cable sphere 6 will be cylindrically shaped. This is to ensure that the cable spheres will tend to become snagged as little as possible when the cable is dragged along the seabed.

The two halves of the outer clamps are preferably mounted together by means of a screw connection, shown in Figure 7 as horizontal screws.

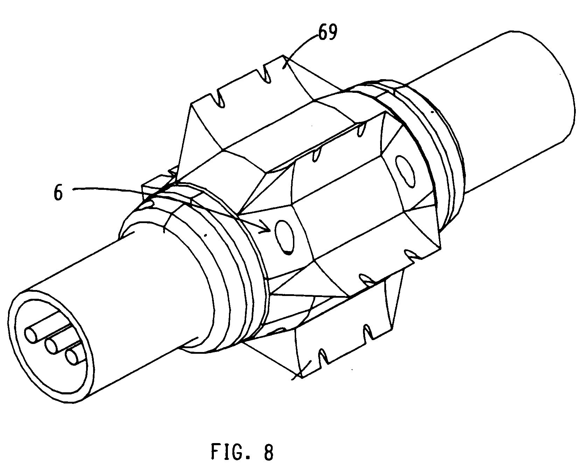

In order to ensure further that each cable sphere achieves a good contact with the seabed, it can be provided with fins 69 as illustrated in Figure 8. The fins 69 will, particularly where the bed is soft, penetrate down into the seabed, which will be of particular importance for the detection of wave movements at a horizontal level in the seabed.

## Claims

1. A marine seismic cable (2) for use on or near the sea bed (3) comprising one or more pulling cables (11), a data cable (12) and a sleeve (10) which surrounds these, and groups of geophones located in a cable sphere behind each other along the cable, characterised in that: each cable sphere comprises an inner clamp (13,14) for through running of the cables (11,12) and outer clamps (62,63) which connect the cable sphere and the sleeve (10); each group of geophones and position metering instruments are located in a lower sphere part of each cable sphere; a wave-shaped spring (60a,60b) is located on a shoulder (65,66) on each of the outer clamps (62,63) and with the outer surface of the wave-shaped spring (60a,60b) resting against the inner side of an outwardly facing collar of the cable sphere for radial shock insulation; and a wave-shaped ring (26,27) is located internally for and in contact with each of the end parts of the inner clamp (13,14) and on the outer side of the end surfaces of the cable sphere for axial shock insulation.

2. A cable as claimed in Claim 1, characterised in that the cable sphere comprises a middle sphere part (32) comprising a cavity with a floor (34) and two walls (35,36) through which the cables located in the inner clamp (13,14) extend, and an upper sphere part (33) for closing the cavity of the middle sphere part (32).

3. A cable as claimed in Claim 2, characterised in that the cable sphere includes a lower sphere part having a cavity for geophones and position metering instruments which is closed and water-tightly fastened to the underside of middle sphere part (32).

4. A cable as claimed in Claim 3, characterised in that the geophones and position metering instruments are moulded in the geophone cavity (48,51) by means of a polymer material.

5. A cable as claimed in any preceding Claim, characterised in that the internal clamp comprises an upper clamp part (13) and a lower clamp part (14) which each include a plate-formed middle part (17,18), and a semi-cylindrical end parts (21a,21b,22a,22b) comprising in the axial direction an external surface (21a-24a), an internal surface (21b-24b), a guiding groove (21c-24c) between these and innermost a vertical surface (21d-24) adapted for the accommodation of wave rings (26,27).

6. A cable as claimed in any of Claims 2 to 5, characterised in that the middle sphere part (32) comprises a floor (34) and walls (35,36) and in that is arranged with an inlet and a terminal for one of the ends of a connector (38) whose other end is connected to a data cable (20); a signal cable extending from the one end of the connector (38) via the channel (37) in middle sphere part (32) and to the geophones/position metering instrument (52-55).

7. A cable as claimed in any preceding Claim, characterised in that it comprises two pulling cables (11) and a data cable (12) placed between these, that for each cable sphere point a data cable outlet (20) is arranged, and that the cables (11,12) are held in mutual position at each sphere point by grooves (11a,12a) in an inner clamp (13,14).

8. A cable as claimed in Claims 2 to 7, characterised in that the cable sphere parts have at each end an outwardly facing collar (57-59) with an inwardly facing surface for contact with the wave shaped springs (60a,60b).

9. A cable as claimed in any preceding Claim, characterised in that the outer set of clamps (62,63) which are divided into two comprise internally in the axial direction an outer surface (62a,63a), an inner surface (62b,63b), an elevation (62c,63c) adapted to the grooves (21c-24c) of the internal clamp and externally a shoulder (65,66) against which the wave spring (60a,60b) rests.

10. A cable as claimed in any preceding Claim, characterised in that the cable sphere, in the mounted position, has a shape with a central cylindrical portion which, towards the end portions transforms into a conically narrowing portion and that the outer clamps also have as an extension a conically narrowing shape towards the cable.

11. A cable as claimed in any preceding Claim, characterised in that the cable sphere is provided with fins (69).

## Patentansprüche

1. Seismisches Seekabel (2) zur Verwendung auf dem oder in der Nähe des Meeresbodens (3), umfassend ein oder mehrere Zugkabel (11), ein Datenkabel (12) und eine Hülle (10), welche diese umgibt, und Gruppen von Geophonen, die in einer Kabelkugel entlang des Kabels hintereinander angeordnet sind, dadurch gekennzeichnet, daß jede Kabelkugel eine innere Klemmschelle (13, 14) zum Durchlaufen der Kabel (11, 12) und äußere Klemmschellen (62, 63) umfaßt, welche die Kabelkugel und die Hülse (10) verbinden; jede Gruppe von Geophonen und Positionsmeßgeräten in einem unteren Kugelteil jeder Kabelkugel angeordnet ist; eine wellenförmige Feder (60a, 60b) auf einem Ansatz (65, 66) an jeder der äußeren Klemmschellen (62, 63) angeordnet ist, wobei die Außenfläche der wellenförmigen Feder (60a, 60b) gegen die Innenseite eines nach außen weisenden Kranzes der Kabelkugel zur radialen Stoßisolierung aufliegt; und daß ein wellenförmiger Ring (26, 27) an der Innenseite für den und in Kontakt mit jedem der Endteile der inneren Klemmschelle (13, 14) und an der Außenseite der Endflächen der Kabelkugel zur axialen Stoßisolierung angeordnet ist.

2. Kabel nach Anspruch 1, dadurch gekennzeichnet, daß die Kabelkugel einen mittleren Kugelteil (32) umfaßt, der einen Hohlraum mit einem Boden (34) und zwei Wänden (35, 36) aufweist, durch welche sich die Kabel, die in der inneren Klemmschelle (13, 14) angeordnet sind, erstrecken, und einen oberen Kugelteil (33) zum Verschließen des Hohlraumes des mittleren Kugelteiles (32).

3. Kabel nach Anspruch 2, dadurch gekennzeichnet, daß die Kabelkugel einen unteren Kugelteil mit einem Hohlraum für Geophone und Positionsmeßinstrumente enthält, der geschlossen und wasserdicht an der Unterseite des mittleren Kugelteiles (32) befestigt ist.

4. Kabel nach Anspruch 3, dadurch gekennzeichnet, daß die Geophone und Positionsmeßinstrumente durch ein Polymermaterial in dem Geophon-Hohlraum (48, 51) eingepaßt sind.

5. Kabel nach einem der vorangehenden Ansprüche, dadurch gekennzeichnet, daß die innere Klemmschelle einen oberen Klemmschellenteil (13) und einen unteren Klemmschellenteil (14) umfaßt, die jeweils einen plattenförmigen mittleren Teil (17, 18) aufweisen, und halbzylindrische Endteile (21a, 21b, 22a, 22b), die in die Längsrichtung eine Außenfläche (21a-24a), eine Innenfläche (21b-24b), eine dazwischenliegende Führungsrille (21c-24c) und im Innersten eine senkrechte Fläche (21d-24d) umfassen, die zur Aufnahme von Wellringen (26, 27) ausgebildet ist.

6. Kabel nach einem der Ansprüche 2 bis 5, dadurch gekennzeichnet, daß der mittlere Kugelteil (32) einen Boden (34) und Wände (35,36) umfaßt, und daß er mit einem Einlaß und einem Anschluß für eines der Enden eines Steckverbinders (38) versehen ist, dessen anderes Ende mit einem Datenkabel (20) verbunden ist; wobei sich ein Signalkabel von dem einen Ende des Steckverbinders (38) über den Kanal (37) in den mittleren Kugelteil (32) und zu den Geophonen/Positionsmeßinstrument (52-55) erstreckt.

7. Kabel nach einem der vorangehenden Ansprüche, dadurch gekennzeichnet, daß es zwei Zugkabel (11) und ein dazwischenliegendes Datenkabel (12) umfaßt, daß für jeden Kabelkugelpunkt ein Datenkabelauslaß (20) vorgesehen ist und daß die Kabel (11, 12) an jedem Kugelpunkt durch Rillen (11a, 12a) in einer inneren Klemmschelle (13, 14) zueinander in Position gehalten werden.

8. Kabel nach einem der Ansprüche 2 bis 7, dadurch gekennzeichnet, daß die Kabelkugelteile an jedem Ende einen nach außen weisenden Kranz (57-59) mit einer nach innen weisenden Fläche für den Kontakt mit den wellenförmigen Federn (60a, 60b) aufweisen.

9. Kabel nach einem der vorangehenden Ansprüche, dadurch gekennzeichnet, daß der äußere Satz von Klemmschellen (62, 63), die zweigeteilt sind, an der Innenseite in die Längsrichtung eine Außenfläche (62a, 63a), eine Innenfläche (62b, 63b), eine Erhebung (62c, 63c), die für die Rillen (21c-24c) der inneren Klemmschelle ausgebildet ist, und an der Außenseite einen Ansatz (65, 66), gegen den die Wellfeder (60a, 60b) aufliegt, umfaßt.

10. Kabel nach einem der vorangehenden Ansprüche, dadurch gekennzeichnet, daß die Kabelkugel in der befestigten Position eine Form mit einem mittleren zylindrischen Teil aufweist, der zu den Endteilen in einen konisch verjüngenden Teil übergeht, und daß die äußeren Klemmschellen als Verlängerung auch eine konisch verjüngende Form zu den Kabeln aufweisen.

11. Kabel nach einem der vorangehenden Ansprüche, dadurch gekennzeichnet, daß die Kabelkugel mit Leitblechen (69) versehen ist.

## Revendications

1. Câble sismique marin (2) destiné à être utilisé sur le fond de la mer (3) ou près de celui-ci, comprenant un ou plusieurs câbles de traction (11), un câble (12) de transmission de données et une gaine (10) qui les entoure, et des groupes de géophones situés dans des sphères de câble, qui se succèdent le long du câble, caractérisé en ce que chaque sphère de câble comprend un manchon intérieur (13, 14) pour le passage libre des câbles (11, 12) et des colliers extérieurs (62, 63) qui relient la sphère de câble à la gaine (10); chaque groupe de géophones, et des instruments de mesure de la position, sont situés dans une partie inférieure de chaque sphère de câble; un ressort ondulé (60a, 60b) est prévu sur un épaulement (65, 66) de chacun des colliers extérieurs (62, 63) avec la surface extérieure du ressort ondulé (60a, 60b) s'appuyant contre le côté intérieur d'un collier, tourné vers l'extérieur, de la sphère de câble, pour l'isolation des chocs radiaux; et une bague ondulée (26, 27) est prévue du côté intérieur de chacune des parties terminales du manchon intérieur (13, 14) et en contact avec elle et sur le côté extérieur des surfaces terminales de la sphère de câble, pour l'isolation des chocs axiaux.

2. Câble suivant la revendication 1, caractérisé en ce que la sphère de câble comprend une partie médiane de sphère (32) présentant une cavité ayant un fond (34) et deux parois (35, 36), cavité à travers laquelle passent les câbles situés dans le manchon intérieur (13, 14), et une partie supérieure de sphère (33) servant à fermer la cavité de la partie médiane de la sphère (32).

3. Câble suivant la revendication 2, caractérisé en ce que la sphère de câble comprend une partie inférieure de sphère ayant une cavité pour géophones et instruments de mesure de la position, qui est fermée et fixée de façon étanche à l'eau à la face inférieure de la partie médiane de la sphère (32).

4. Câble suivant la revendication 3, caractérisé en ce que les géophones et les instruments de mesure de la position sont enrobés d'une matière polymère dans la cavité pour géophones (48, 51).

5. Câble suivant l'une quelconque des revendications précédentes, caractérisé en ce que le manchon intérieur comprend une partie supérieure de manchon (13) et une partie inférieure de manchon (14) dont chacune comprend une partie médiane (17, 18) en forme de plaque et des parties terminales semi-cylindriques (21a, 21b, 22a, 22b) comprenant dans la direction axiale une surface extérieure (21a-24a), une surface intérieure (21b-24b), une gorge de guidage (21c-24c) entre celles-ci et, le plus à l'intérieur, une surface verticale (21d-24) conçue pour recevoir des bagues ondulées (26, 27).

6. Câble suivant l'une quelconque des revendications 2 à 5, caractérisé en ce que la partie médiane de la sphère (32) comprend un fond (34) et des parois (35, 36), et en ce qu'elle est pourvue d'une entrée et d'un bloc de raccordement pour l'une des extrémités d'un connecteur (38) dont l'autre extrémité est reliée à un câble de transmission de données (20), un câble de transmission de signaux allant de cette extrémité du connecteur (38), en passant par le passage (37) dans la partie médiane (32) de la sphère, jusqu'aux géophones et à l'instrument de mesure de la position (52-55).

7. Câble suivant l'une quelconque des revendications précédentes, caractérisé en ce qu'il comprend deux câbles de remorquage (11) et un câble de transmission de données (12) placé entre eux, en ce qu'une sortie (20) de câble de traction de données est ménagée pour chaque point de sphère du câble et en ce que les câbles (11, 12) sont maintenus dans leur position les uns par rapport aux autres, à chaque point de sphère, par des gorges (11a, 12a) d'un manchon intérieur (13, 14).

8. Câble suivant l'une quelconque des revendications 2 à 7, caractérisé en ce que les parties de la sphère de câble ont à chaque extrémité un collier dirigé vers l'extérieur (57-59), avec une surface tournée vers l'intérieur en contact avec les ressorts ondulés (60a, 60b).

9. Câble suivant l'une quelconque des revendications précédentes, caractérisé en ce que le jeu extérieur de colliers (62, 63) qui sont divisés en deux comprend à l'intérieur, dans la direction axiale, une surface extérieure (62a, 63a), une surface intérieure (62b, 63b), une nervure (62c, 63c) correspondant aux gorges (21c-24c) du manchon intérieur et, à l'extérieur, un épaulement (65, 66) contre lequel s'appuie le ressort ondulé (60a, 60b).

10. Câble suivant l'une quelconque des revendications précédentes, caractérisé en ce que la sphère de câble, en position montée, a une forme comportant une partie cylindrique centrale qui, vers les extrémités, se transforme en une partie qui se rétrécit en cône, et en ce que les colliers extérieurs ont aussi un prolongement dont la forme conique se rétrécit vers le câble.

11. Câble suivant l'une quelconque des revendications précédentes, caractérisé en ce que la sphère de câble est pourvue d'ailettes (69).
